# EUROPÄISCHE PATENTSCHRIFT

(11) **EP 0 732 233 B1**
(45) Veröffentlichungstag und Bekanntmachung des Hinweises auf die Patenterteilung: **29.07.1998**
(21) Anmeldenummer: 95117372.3
(22) Anmeldetag: 04.11.1995
(51) Int. Cl.: B60J 7/22

(54) **Fahrzeug mit einem verstaubaren Dach und Windschutz**
Vehicle with stowable roof and wind deflector
Véhicule avec toit pouvant être rangé et déflecteur de vent

(30) Priorität: 13.03.1995 DE 19508989
(43) Veröffentlichungstag der Anmeldung: 18.09.1996
(73) Patentinhaber: Bayerische Motoren Werke Aktiengesellschaft, 80788 München (DE)
(72) Erfinder: Siring, Harald, D-81377 München (DE); Bambach, Manfred, Dr., D-80939 München (DE)

(56) Entgegenhaltungen:
- DE-A- 3 935 630
- DE-A- 4 311 240
- DE-C- 3 914 035
- DE-C- 4 037 705

## Beschreibung

Die Erfindung bezieht sich auf ein Fahrzeug mit einem verstaubaren Dach nach dem Oberbegriff des Patentanspruches 1.

Ein bekanntes derartiges Fahrzeug (DE 43 11 240 C1) umfaßt zwei gelenkig miteinander verbundene und mit einem Netz bespannte Rahmen, die zusammengeklappt von der Unterseite eines Verdeckkastendeckels nach vorne geschwenkt werden können, worauf dann der Windschutz-Rahmen nach oben klappbar ist. Dies macht es erforderlich, zum Aufrichten des Windschutzes vorher den Verdeckkastendeckel anzuheben, damit die beiden Rahmen genügend Raum zum Nachvorneschwenken haben. Dies verkompliziert den Bewegungsablauf.

Es ist ferner bekannt (DE 39 35 630 A1), an einem Verdeckkastendeckel einen Abdeckrahmen so anzulenken, daß er um eine vordere Querachse nach oben schwenkbar ist. Zwischen dem Abdeckrahmen und dem Verdeckkastendeckel kann ein faltbares oder aufrollbares Flächengebilde angeordnet sein, das nach einem gewissen Anheben des Abdeckrahmens den Windschutz bildet. Diese Art eines Windschutzes wirkt voluminös und vermittelt in Wirkstellung des Windschutzes den Eindruck eines Cabriolets, bei dem das Verdeck oberhalb der Brüstungshöhe abgelegt ist.

Der Erfindung liegt die Aufgabe zugrunde, ein Fahrzeug mit einem verstaubaren Dach und einem Windschutz nach dem Oberbegriff des Patentanspruches 1 zu schaffen, bei dem mit einfachem und daher unter Umständen auch leichter automatisierbarem Bewegungsablauf der Windschutz in seine Wirkstellung und auch wieder zurück verlagerbar ist.

Diese Aufgabe wird erfindungsgemäß durch die Merkmale des Patentanspruchs 1 gelöst.

Weitere vorteilhafte Ausgestaltungen sind Gegenstand der Unteransprüche.

Die auf der Oberseite des Deckels angeordnete Klappe kann von dem zur Abdeckung des Aufnahmeraums für das Dach vorgesehenen Deckel nach vorne geklappt werden, ohne daß der Deckel hierzu entriegelt und angehoben werden braucht. In der Ruhestellung ist der eigentliche Windschutz unterhalb der Klappe geschützt angeordnet. Beim Verschwenken der Klappe etwa um 180° nach vorne kommt der Windschutz dann oberhalb der geschwenkten Klappe zu liegen. Er könnte, wenn dies bauraummäßig möglich ist, dabei schon fest nach oben ragen. Für eine raumsparende Bauweise ist es aber zweckmäßig, den Windschutz an der Klappe schwenkbar zu lagern und ihn aus einer an der Klappe anliegenden Ruhelage in eine von der Klappe zumindest annähernd lotrecht nach oben abstehende Wirkstellung zu verschwenken.

In einer vorteilhaften Ausgestaltung ist die Klappe U-förmig und an den freien Schenkeln schwenkbar mit dem Deckel verbunden, wobei ferner mit dem Quersteg der Klappe das freie Ende einer flexiblen Abdeckung verbunden ist, die von einer im Bereich des Deckel-Querstegs gelagerten Wickelrolle gegen Federwirkung abrollbar ist. Mit einer derart angeordneten und betätigbaren Abdeckung gelingt es besonders einfach, bei einem viersitzigen Cabriolet auch den Raum hinter den vorderen Sitzen etwa in Brüstungshöhe zumindest so weit zu verschließen, daß im unteren Bereich der Vordersitze keine störenden Zugerscheinungen auftreten. Die störenden Zugerscheinungen im Bereich der Schultern und des Kopfes der auf den Vordersitzen sitzenden Personen werden durch den eigentlichen Windschutz reduziert.

Der neue Windschutz ist sowohl für Fahrzeuge verwendbar, die feste, klappbare und auf diese Weise absenkbare Dachteile haben, als auch für Fahrzeuge, die mit einem faltbaren Verdeck versehen sind. In beiden Fällen ist an dem Deckel, der entweder die abgesenkten Dachteile oder das abgesenkte Faltverdeck verdeckt, auf der Oberseite die Klappe schwenkbar angeordnet, die den Windschutz aufweist.

Die Erfindung ist im folgenden anhand zweier in der Zeichnung dargestellter Ausführungsbeispiele näher erläutert. Es zeigen
- Fig. 1: eine Schrägansicht auf den hinteren Teilbereich eines viersitzigen Cabriolets;
- Fig. 2: einen Schnitt nach der Linie II-II in Fig. 1;
- Fig. 3: eine der Fig. 1 entsprechende Ansicht, jedoch mit einem in Wirkstellung befindlichen Windschutz;
- Fig. 4 bis Fig. 6: den Figuren 1 bis 3 entsprechende Ansichten eines zweiten Ausführungsbeispiels.

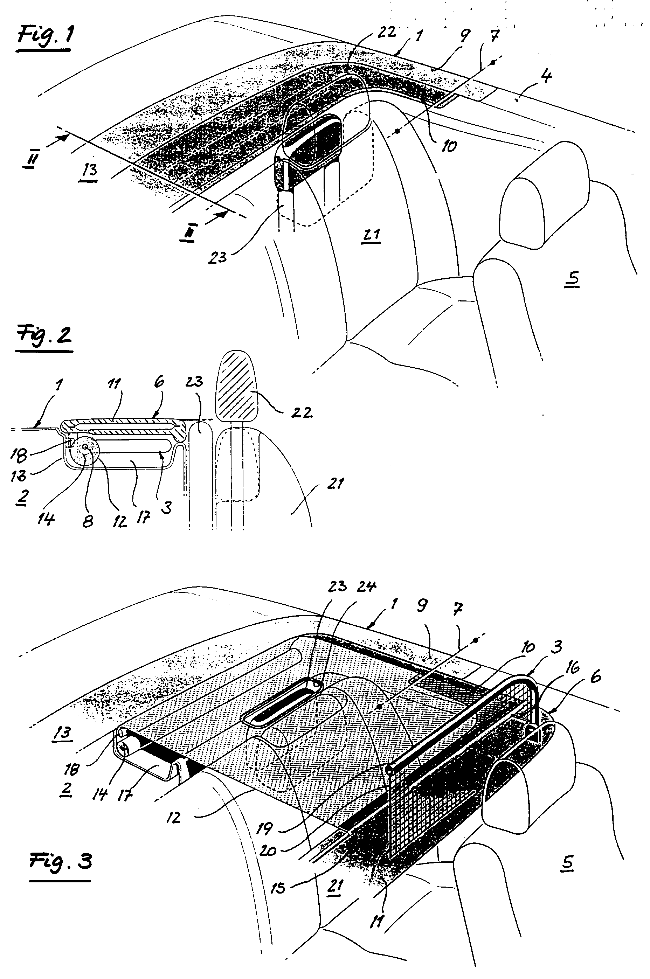

Das in Fig. 1 der Zeichnung mit seinem heckseitigen Teilbereich dargestellte viersitzige Cabriolet umfaßt einen Deckel 1, der in Draufsicht U-förmig gestaltet ist und in seinem hinteren Bereich, wie üblich, um eine etwa in Brüstungshöhe liegende Querachse so weit nach oben schwenkbar ist, daß aus dem von dem Deckel 1 verschlossenen Aufnahmeraum 2 ein nicht näher dargestelltes Faltverdeck herausklappbar ist. Das Cabriolet umfaßt einen Windschutz 3, der in Fig. 3 in seiner Arbeitsstellung dargestellt ist, in der er über die Brüstung 4 im Bereich hinter den vorderen Sitzen 5 so weit nach oben gerichtet ist, daß der bei vielen Cabriolets auftretende vom hinteren Fahrzeugbereich zu den vorderen Sitzen 5 strömende Wind weitgehend abgeschottet wird.

Der Windschutz 3 ist an einer Klappe 6 angeordnet, die aus ihrer in den Figuren 1 und 2 ersichtlichen Ruhelage, in der sie annähernd parallel und im wesentlichen oberhalb des Deckels 1 liegt, um eine Querachse 7 gegenüber dem Deckel 1 um etwa 180° in ihre in Fig. 3 gezeigte Arbeitsstellung schwenkbar ist, in der der Windschutz 3 von der Klappe 6 nach oben absteht.

Wie man erkennt, ist der Windschutz 3 um eine quer verlaufende Schwenkachse 7 relativ zur Klappe 6 schwenkbar. In der Ruhelage (Fig. 2) liegt der Windschutz 3 im wesentlichen parallel zur Klappe 6. In der Wirkstellung gemäß Fig. 3 ist der Windschutz 3 relativ zur Ebene der Klappe 6 um etwa 90° geschwenkt und befindet sich damit in einer weitgehend aufrechten Position. Sowohl das Verschwenken der Klappe 6 aus der in Fig. 1 ersichtlichen Ruhestellung in die in Fig. 3 ersichtliche Arbeitsstellung des Windschottes als auch das Verschwenken des Windschutzes 3 gegenüber der Klappe 6 können motorisch, ggf. beides über den Klappenantrieb, erfolgen. Der Deckel 1 ist in Draufsicht im wesentlichen U-förmig mit in Fahrtrichtung nach vorne gerichteten Schenkeln 9. Die Klappe 6 ist ebenfalls U-förmig ausgebildet und weist Klappenschenkel 10 auf, die in Ruhestellung (Fig. 1) gleichermaßen nach vorne verlaufen. Die Enden der Klappenschenkel sind schwenkbar um die Querachse 7 im Bereich der Enden der Schenkel 9 des Deckels 1 gelagert. Die Klappe 6 kann auf diese Weise aus der in den Figuren 1 und 2 gezeigten Position, in der sie oberhalb des Deckels 1 liegt, in die in Fig. 3 gezeigte Position verschwenkt werden, in der sie mit ihrem Quersteg 11 in Brüstungshöhe bis weitgehend zur Lehne des vorderen Sitzes 5 reicht.

Mit dem Quersteg 11 der Klappe 6 ist das freie Ende einer flexiblen Abdeckung 12 verbunden, die gegen Federwirkung von einer im Bereich des Deckelquersteges 13 gelagerten Wickelrolle 14 abrollbar ist. Die Abdeckung 12 kann dabei über Zugbänder oder -seile mit der Wickelrolle 14 verbunden sein. Am freien Ende der Abdeckung 12 ist zweckmäßig eine stabförmige Versteifung 15 vorgesehen, die über Zwischenglieder 16 mit der Klappe 6 verbunden ist.

An dem Quersteg 13 des Deckels 1 ist ein nach oben offener Aufnahmeraum 17 für die Wickelrolle 14, den Quersteg 11 der Klappe 6 und den Windschutz 3 vorgesehen. Ferner weist der Aufnahmeraum 17 eine zur Wickelachse der Wickelrolle 14 parallele Führungsleiste 18 für die flexible Abdeckung 12 auf.

Der an der Klappe 6 gelagerte Windschutz 3 umfaßt einen äußeren Rahmen 19, in dem ein zumindest teilweise durchsichtiges Material 20 aufgespannt ist.

Nach den Figuren 1 bis 3 hat das Fahrzeug für die hinteren Sitze 21 absenkbare Kopfstützen 22, die abgesenkt unterhalb der Höhe der Brüstung 4 liegen. Beim Aufrichten des Windschutzes 3, bei dem auch die Abdeckung 12 herausgezogen wird, sind die Kopfstützen 22 bis etwa unterhalb der Höhe der Brüstung 4 abgesenkt.

Ist das Cabriolet mit einem über die Brüstungshöhe 4 nach oben verlagerbaren Überrollbügel 23 ausgerüstet, so ist die Abdeckung 12 mit entsprechend angeordneten Durchbrechungen 24 für den Durchtritt des Überrollbügels 23 versehen. Die Durchbrechungen 24 sind mit einer Einfassung versehen und kommen bei ausgezogener Abdeckung 12 in eine in Draufsicht mit dem Überrollbügel 23 weitgehend deckungsgleiche Position.

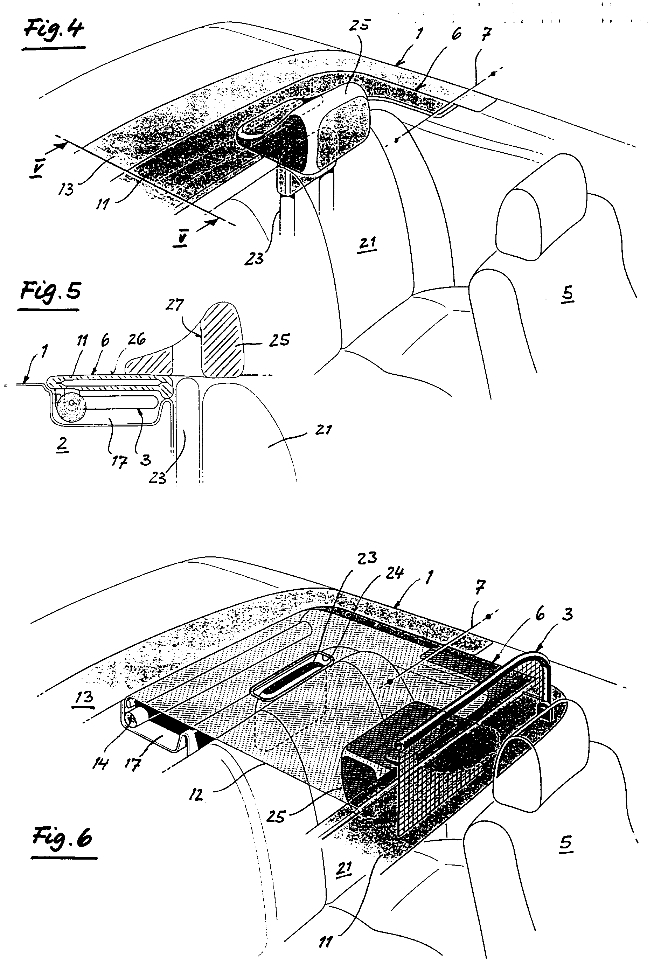

In den Figuren 3 bis 6 ist ein etwas abgeändertes Ausführungsbeispiel gezeigt, das sich von dem Ausführungsbeispiel nach den Figuren 1 bis 3 im wesentlichen dadurch unterscheidet, daß die Kopfstützen 25 für die hinteren Sitze anders ausgebildet und angeordnet sind. Im übrigen sind für das Ausführungsbeispiel nach den Figuren 4 bis 6 die zuvor gebrauchten Bezugszeichen verwendet.

Die Kopfstützen 25 für die hinteren Sitze 21 sind an der Klappe 6 angeordnet, und zwar in Ruhestellung der Klappe 6 (Figuren 4 und 5), an deren Oberseite 26. Sie erstrecken sich von dort nach vorne bis in den Bereich oberhalb der Rückenlehne des hinteren Sitzes 21. Die Kopfstützen 25 weisen in diesem Fall Aussparungen 27 für den ungehinderten Durchtritt des im Fall eines Überschlags ausfahrbaren Überrollbügels 23 auf. Die Kopfstütze 25, die an der Klappe 6 fest angeordnet ist, wird beim Aufrichten des Windschutzes mit der Klappe 6 um die Querachse 7 verschwenkt und gelangt dann, wie in Fig. 6 erkennbar, in eine von der Klappe 6 nach unten in den Raum zwischen dem hinteren Sitz 21 und dem vorderen Sitz 5.

## Patentansprüche

1. Fahrzeug mit einem verstaubaren Dach, insbesondere Cabriolet, mit einem Deckel (1), der etwa in Brüstungshöhe um eine Querachse schwenkbar ist und einen Aufnahmeraum (2) für das Dach oben verschließt, ferner mit einem Windschutz (3), der an dem Deckel (1) so gelagert ist, daß er aus einer in Ruhestellung im Deckel (1) aufgenommenen Lage in eine zumindest teilweise über die Brüstung nach oben gerichtete Arbeitsstellung verlagerbar ist,
dadurch gekennzeichnet, daß der Windschutz (3) an einer Klappe (6) angeordnet ist, die aus ihrer Ruhestellung, in der sie annähernd parallel und im wesentlichen oberhalb des Deckels (1) liegt, um eine Querachse (7) gegenüber dem Deckel (1) um etwa 180° in ihre Arbeitsstellung schwenkbar ist, in der der Windschutz von der Klappe (6) nach oben absteht.

2. Fahrzeug nach Anspruch 1,
dadurch gekennzeichnet, daß der Windschutz (3) um eine quer verlaufende Schwenkachse (7) relativ zur Klappe (6) schwenkbar ist.

3. Fahrzeug nach Anspruch 1 und/oder 2,
dadurch gekennzeichnet, daß die Klappe (6) und/oder der Windschutz (3) motorisch verstellbar ist.

4. Fahrzeug nach Anspruch 1, mit einem in Draufsicht U-förmigen Deckel, dessen Schenkel in Fahrtrichtung nach vorne gerichtet sind,
dadurch gekennzeichnet, daß die Klappe (6) ebenfalls U-förmig ausgebildet ist und in Ruhestellung nach vorne verlaufende Klappenschenkel (10) aufweist, deren Enden schwenkbar im Bereich der Enden der Schenkel (9) des Deckels (1) gelagert sind.

5. Fahrzeug nach Anspruch 4,
dadurch gekennzeichnet, daß mit dem Quersteg (11) der Klappe (6) das freie Ende einer flexiblen Abdeckung (12) verbunden ist, die von einer im Bereich des Deckel-Quersteges (13) gelagerten Wickelrolle (14) gegen Federwirkung abrollbar ist.

6. Fahrzeug nach Anspruch 5,
dadurch gekennzeichnet, daß die Abdeckung (12) über Zugbänder oder -seile mit der Wickelrolle (14) verbunden ist.

7. Fahrzeug nach Anspruch 5,
dadurch gekennzeichnet, daß in dem Quersteg (13) des Deckels (1) ein nach oben offener Aufnahmeraum (17) für die Wickelrolle, den Quersteg (11) der Klappe (6) und den Windschutz (3) vorgesehen ist.

8. Fahrzeug nach Anspruch 7,
dadurch gekennzeichnet, daß in dem Aufnahmeraum (17) eine zur Wickelachse der Wickelrolle (14) parallele Führungsleiste (18) für die flexible Abdeckung (12) vorgesehen ist.

9. Fahrzeug nach Anspruch 1,
dadurch gekennzeichnet, daß der an der Klappe (6) gelagerte Windschutz (3) einen äußeren Rahmen (19) umfaßt, in dem ein zumindest teilweise durchsichtiges Material (20) aufgespannt ist.

10. Fahrzeug nach den Ansprüchen 3 und 5, mit absenkbaren Kopfstützen für die hinteren Sitze,
dadurch gekennzeichnet, daß beim Aufrichten des Windschutzes die Kopfstützen (22) bis etwa unterhalb die Brüstungshöhe absenkbar sind.

11. Fahrzeug nach Anspruch 5, mit wenigstens einem über die Brüstungshöhe nach oben verlagerbaren Überrollbügel,
dadurch gekennzeichnet, daß die Abdeckung (12) mit entsprechend angeordneten Durchbrechungen (24) für den Durchtritt des Überrollbügels (23) versehen ist.

12. Fahrzeug nach Anspruch 1, mit Kopfstützen für die hinteren Sitze,
dadurch gekennzeichnet, daß die Kopfstützen (25) an der Klappe (6) angeordnet sind.

13. Fahrzeug nach Anspruch 12,
dadurch gekennzeichnet, daß die Kopfstützen (25) in Ruhestellung der Klappe (6) an deren Oberseite (26) angeordnet sind und sich von dort nach vorne bis in den Bereich oberhalb der Rückenlehne eines hinteren Sitzes (21) erstrecken.

14. Fahrzeug nach den Ansprüchen 11 und 13,
dadurch gekennzeichnet, daß die Kopfstützen (25) Aussparungen (27) für den Durchtritt eines Überrollbügels (23) aufweisen.

## Claims

1. A vehicle having a retractable roof, especially a convertible, comprising a cover (1) pivotable around a transverse axis approximately at the uppermost surface of the vehicle and enclosing a space (2) at the top for receiving the roof, also comprising a windscreen (3) which is mounted on the cover (1) so as to be movable from an inoperative position inside the cover (1) into a working position extending upwards at least partly above the side rail, characterised in that the windscreen (3) is disposed on a flap (6) which can be pivoted out of its inoperative position, in which it is approximately parallel to and substantially above the cover (1), through approximately 180° relative to the cover (1) around a transverse axis (7) into its operative position, in which the windscreen projects upwards from the flap (6).

2. A vehicle according to claim 1,
characterised in that the windscreen (3) is pivotable relative to the flap (6) around a transverse axis (7).

3. A vehicle according to claim 1 and/or 2,
characterised in that the flap (6) and/or the windscreen (3) is adjustable by a motor.

4. A vehicle according to claim 1, comprising a cover which is U-shaped in cross-section, the arms thereof extending forwards in the direction of travel, characterised in that the flap (6) is also U-shaped and has arms (10) which extend forwards in the inoperative position and the ends of which are pivotably mounted near the ends of the arms (9) of the cover (1).

5. A vehicle according to claim 4,
characterised in that the transverse web (11) of the flap (6) is connected to the free end of a flexible covering (12) which can be unrolled against spring action from a roll (14) disposed near the transverse web (13) of the cover.

6. A vehicle according to claim 5,
characterised in that the cover (12) is connected to the roll (14) by tension members or cables.

7. A vehicle according to claim 5,
characterised in that an upwardly open space (17) for receiving the roll, the transverse web (11) of the flap (6) and the windscreen (3) is provided in the transverse web (13) of the cover (1).

8. A vehicle according to claim 7,
characterised in that a guide strip (18) for the flexible covering (12) and parallel to the axis of the roll (14) is provided in the space (17).

9. A vehicle according to claim 1,
characterised in that the windscreen (3) mounted on the flap (6) comprises an outer frame (19) in which an at least partly transparent material (20) is clamped.

10. A vehicle according to claims 3 and 5 comprising lowerable head rests for the rear seats,
characterised in that when the windscreen is erected the head rests (22) can be lowered somewhat below the uppermost surface of the vehicle.

11. A vehicle according to claim 5, comprising at least one roll bar which can be moved upwards above the uppermost surface of the vehicle, characterised in that the covering (12) is formed with apertures (24) suitably disposed for the roll bar (23) to extend through them.

12. A vehicle according to claim 1 with head rests for the rear seats,
characterised in that the head rests (25) are disposed on the flap (6).

13. A vehicle according to claim 12,
characterised in that when the flap (6) is in the inoperative position the head rests (25) are disposed on the top surface (26) thereof, from which they extend forwards to the region above the back of a rear seat (21).

14. A vehicle according to claims 11 and 13,
characterised in that the head rests (25) have recesses (27) for a roll bar (23) to extend through.

## Revendications

1. Véhicule à toit escamotable ou pouvant être rangé notamment cabriolet comprenant un couvercle (1) qui pivote autour d'un axe transversal sensiblement à hauteur d'appui et ferme le dessus d'un logement (2) pour le toit, ainsi qu'un déflecteur (3) monté sur le couvercle (1) pour qu'à partir d'une position prise en position de repos dans le couvercle (1), il puisse venir dans au moins une position active qui dépasse partiellement vers la hauteur d'appui,
caractérisé en ce que
le déflecteur (3) est monté sur un volet (6), qui partant d'une position de repos dans laquelle il est sensiblement parallèle et essentiellement au-dessus du couvercle (1), peut pivoter autour d'un axe transversal (7) par rapport au couvercle (1) d'un angle de 180° et venir en position de travail dans laquelle le déflecteur dépasse vers le haut du volet (6).

2. Véhicule selon la revendication 1,
caractérisé en ce que
le déflecteur (3) peut pivoter autour d'un axe de pivotement (7) transversal par rapport au volet (6).

3. Véhicule selon l'une des revendications 1 ou 2,
caractérisé en ce que
le volet (6) et/ou le déflecteur sont commandés par un moteur.

4. Véhicule selon la revendication 1 comprenant un couvercle ayant en vue de dessus une forme de U dont les branches sont dirigées vers l'avant dans le sens de circulation du véhicule,
caractérisé en ce que
le volet (6) a également une forme de U et en position de repos, il comporte des branches (10) dirigées vers l'avant et dont les extrémités sont montées pivotantes au niveau des extrémités des branches (9) du couvercle (1).

5. Véhicule selon la revendication 4,
caractérisé en ce que
l'extrémité libre d'une capote (12) souple est reliée à la branche transversale (11) du volet (6), cette capote se dévidant d'un rouleau (14) contre l'action d'un ressort, dans une zone de la branche transversale (13) du couvercle.

6. Véhicule selon la revendication 5,
caractérisé en ce que
la capote (12) est reliée au rouleau d'enroulement (14) par des rubans ou câbles de traction.

7. Véhicule selon la revendication 5,
caractérisé
par un logement (17) ouvert vers le haut, prévu dans la branche transversale (13) du couvercle (1) pour recevoir le rouleau, la traverse (11) du volet (6) et le déflecteur de vent (3).

8. Véhicule selon la revendication 7,
caractérisé en ce que
le logement (17) comporte une barrette de guidage (18) parallèle à l'axe d'enroulement du rouleau (14) pour la capote souple (12).

9. Véhicule selon la revendication 1,
caractérisé en ce que
le déflecteur (3) monté sur le volet (6) comprend un cadre extérieur (19) sur lequel est tendue une matière (20) au moins partiellement transparente.

10. Véhicule selon l'une quelconque des revendications 3 et 5 avec des appuis-tête enfoncés pour les sièges arrière,
caractérisé en ce que
lorsque le déflecteur se déploie, les appuis-tête (22) s'abaissent sensiblement jusqu'en dessous de la hauteur d'appui.

11. Véhicule selon la revendication 5 avec au moins un arceau de protection contre le renversement, prolongé vers le haut au-delà de la hauteur d'appui,
caractérisé en ce que
la capote (12) est munie de passages (24) pour recevoir l'étrier de renversement (23).

12. Véhicule selon la revendication 1 comportant les appuis-tête pour les sièges arrière,
caractérisé en ce que
les appuis-tête (25) sont montés sur le volet (6).

13. Véhicule selon la revendication 12,
caractérisé en ce que
les appuis-tête (25) se trouvent au niveau du côté supérieur (26) lorsque le volet (6) est en position de repos et de là ils s'étendent vers l'avant et dans la zone en dessous du dossier d'un siège arrière (21).

14. Véhicule selon les revendications 11 et 13,
caractérisé en ce que
les appuis-tête (25) comportent des cavités (27) pour le passage d'un arceau de retournement (23).
